(19) Europäisches Patentamt
European Patent Office
Office européen des brevets

(11) **EP 4 400 819 A1**

(12) **EUROPÄISCHE PATENTANMELDUNG**

(43) Veröffentlichungstag:
**17.07.2024 Patentblatt 2024/29**

(21) Anmeldenummer: **24150921.5**

(22) Anmeldetag: **09.01.2024**

(51) Internationale Patentklassifikation (IPC):
***G01K 3/04*** *(2006.01)*

(52) Gemeinsame Patentklassifikation (CPC):
**G01K 3/04**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: **10.01.2023 DE 102023100389**

(71) Anmelder: **Ruhr-Universität Bochum**
**44801 Bochum (DE)**

(72) Erfinder:
- **Schmitt, Philip**
  **44801 Bochum (DE)**
- **Hoffmann, Martin**
  **44879 Bochum (DE)**

(74) Vertreter: **Michalski Hüttermann & Partner**
**Patentanwälte mbB**
**Kaistraße 16A**
**40221 Düsseldorf (DE)**

(54) **VORRICHTUNG UND VERFAHREN ZUR ENERGIEAUTARKEN INTEGRATION EINES TEMPERATUR-ZEIT-VERLAUFS**

(57) Die Erfindung betriff ein mikromechanisches Messsystem (100) zur Messung und Speicherung eines Temperatur-Zeit Integrals, umfassend einen kriechfähigen Zugbalken (400) und einen Kraft-Generator (500), der dazu ausgeführt ist, den kriechfähigen Zugbalken (400) mit einer konstanten und wenigstens stückweise wegunabhängige Zugbeanspruchung zu beaufschlagen, so dass dieser ein Verschiebungssignal bereitstellt. Auf diese Weise wird ein System bereitgestellt, um das Temperatur-Zeit-Integral an einem zu überwachenden Prüfobjekt auf sichere und einfache Weise zu erfassen.

Fig. 3

**Beschreibung**

Die vorliegende Erfindung betrifft ein mikromechanisches Messsystem zur Messung und Speicherung eines Temperatur-Zeit Integrals.

Die Lebensdauer vieler verderbliche Güter wie beispielsweise Medikamente, Lebensmittel oder Chemikalien hängt sowohl von der Lagertemperatur als auch von der Dauer der Lagerung an sich ab: Eine langandauernde Lagerung bei niedriger Temperatur $T$ kann bei verderblichen Gütern eine ähnliche Alterung bewirken wie eine kurze Lagerdauer $t$ bei erhöhter Temperatur $T$. Als Maß für die Temperatureinwirkung eignet sich das Integral des Temperaturverlaufs über der Zeit. Das Temperatur-Zeit-Integral (TTI) fasst Temperatur und Expositionsdauer in einem einzigen Wert zusammen. Für viele verderbliche Produkte korreliert der charakteristische Alterungszustand mit dem TTI.

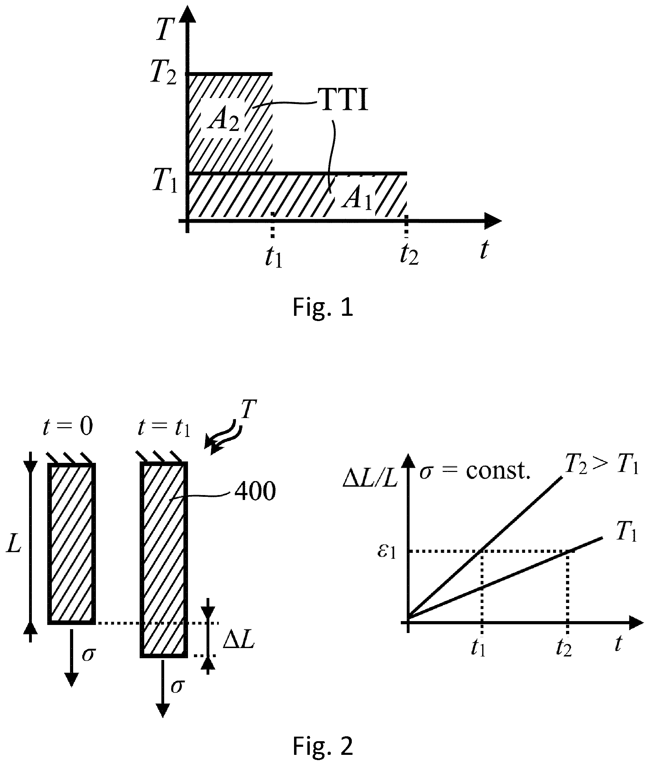

Fig. 1 zeigt in einem Diagramm exemplarisch das TTI für zwei Temperaturverläufe. Der zeitlich kurze Temperaturverlauf über die Zeit $t_1$ bei hoher Temperatur $T_2$ und der lang andauernder Temperaturverlauf über die Zeit $t_2$ bei niedriger Temperatur $T_1$ haben hier das gleiche Temperatur-Zeit Integral. Das Temperatur-Zeit Integral eignet sich daher als charakteristische Messgröße zur Überwachung der Alterung von verderblichen Gütern, wie Lebensmittel, Medikamente, Organen und Blutkonserven, sowie zur Überwachung von Kühlketten. Anstelle produktspezifisch die Alterung anhand direkter Kenngrößen wie beispielsweise dem bakteriellen Wachstum in Lebensmitteln oder der abnehmenden Wirksamkeit von Medikamenten laboratorisch zu bestimmen, kann das TTI als globaler Ersatzparameter herangezogen werden, um schnell eine Abschätzung des Alterungszustands zu erhalten.

Neben der Überwachung von Alterungszuständen eignet sich das TTI auch als Messgröße zur Überprüfung technologischer Prozesse, bei denen sowohl Temperatur als auch Expositionsdauer bei erhöhter Temperatur eine Rolle spielen. Hierzu gehören u.a. Temperprozessen in der Chemie und der Halbleitertechnik, Sterilisationsprozessen in der Medizintechnik oder Backprozessen in der Lebensmittelindustrie.

Aus dem Stand der Technik sind Vorrichtungen zur Erfassung des Temperatur-Zeit Integrals bereits bekannt. In Pandian, A.T., S. Chaturvedi und S. Chakraborty, Applications of enzymatic time-temperature indicator (TTI) devices in quality monitoring and shelflife estimation of food products during storage. Journal of Food Measurement and Characterization, 2021. 15(2): S. 1523-1540 werden Enzym-basierte TTI-Sensoren beschrieben. Solche Sensoren basieren auf einer temperatur- und zeitabhängigen chemischen Reaktion, die zur Veränderung eines pH-Wertes führt. Die Veränderung des pH-Werts führt schließlich zu einer Farbänderung an einem pH-Farbindikator. Das TTI lässt sich somit visuell über einen Farbabgleich des Farbindikators ermitteln. Solche Sensoren haben den Nachteil, dass sie kein diskretes elektrisches Signal liefern, sondern nur eine Farbänderung. Weitere Enzym- und pH-basierte TTI-Indikatoren werden in der EP 0 497 459 A1, der EP 1 781 805 B1, der DE 25 023 24 A1 und der EP 2 697 641 B1 beschrieben.

Die DE 69 633 071 T2 beschreibt einen visuell auslesbaren TTI-Indikator auf Basis eines viskoelastischen Materials und einer porösen Matrix mit beobachtbarer Anzeige. Bei einer Aktivierung des Sensors, wird das viskoelastische Material in Kontakt mit der porösen Matrix gebracht. Das viskoelastische Material beginnt in Abhängigkeit der Temperatur und der Zeit in die poröse Matrix einzudringen und verändert dabei die Lichtdurchlässigkeit der Matrix, sodass z.B. ein Aufdruck unterhalb der porösen Matrix sichtbar wird.

Die US 9 448 182 B2 beschreibt einen TTI-Indikator, der sowohl visuell als auch elektrisch auslesbar ist. Der Indikator basiert auf einer temperatur- und zeitabhängigen physikalischen oder chemischen Reaktion einer Reagenz, wobei eine Reaktion an der Reagenz zu einer Veränderung ihrer visuellen Erscheinung, als auch zu Änderung ihrer elektrischen Eigenschafen (spez. Widerstand, relative Permittivität) führen kann. Die Änderung der elektrischen Eigenschaften kann z.B. in Form einer Widerstandsänderung elektrisch ausgelesen werden. Ein Nachteil dieses TTI-Indikators besteht u.a. in einer aufwendigen elektronischen Auswertung bei der Messung der Veränderung der elektrischen Materialeigenschaften an der Reagenz. Die elektrischen Materialeigenschaften wie etwa die relative Permittivität oder der spezifische Widerstand i.d.R. stark von der Temperatur beim Auslesen abhängig. Folglich muss beim Auslesen des Indikators die aktuelle Temperatur bekannt sein oder es müssen Kompensationsmechanismen vorgesehen werden.

In der WO 2009/144673 A1 werden mikrofluidische Temperatur-Zeit Integratoren vorgestellt, die sich über Technologien der Mikrosystemtechnik fertigen lassen. Die Sensoren bestehen aus einer Kapillare und einer in einem Reservoir befindlichen Flüssigkeit. Die Flüssigkeit wird in Abhängigkeit der Zeit durch die Kapillarkraft in die Kapillare gezogen. Mit steigender Temperatur sinkt die Viskosität der Flüssigkeit und die Fließgeschwindigkeit steigt. Die von der Flüssigkeit zurückgelegte Strecke innerhalb der Kapillare hängt sowohl von der Zeit als auch von der Temperatur ab und gibt Aufschluss über das erreichte TTI. Ein Nachteil dieser Lösung besteht darin, dass die Indikatorflüssigkeit in den Sensor integriert werden muss. Die Kriechgeschwindigkeit innerhalb der Kapillare ist zudem abhängig von der bereits zurückgelegten Strecke, da die viskose Reibung der Flüssigkeit mit den Kapillarwänden mit zunehmendem Füllstand stetig zunimmt. Das Verfahren eignet sich zudem nicht für langfristige Messungen, da bei geringer Fließgeschwindigkeit ein Stocken der Flüssigkeit in der Kapillare erreicht wird.

Aufgabe der vorliegenden Erfindung ist es, eine Vorrichtung und ein Verfahren bereitzustellen, um das Temperatur-Zeit-Integral an einem zu überwachenden Prüfobjekt auf sichere und einfache Weise zu erfassen.

Diese Aufgabe wird durch die Gegenstände der unabhängigen Patentansprüche gelöst. Bevorzugte Ausgestaltungen der Erfindung sind in den Unteransprüchen beschrieben.

Erfindungsgemäß wird ein mikromechanisches Messsystem zur Messung und Speicherung eines Temperatur-Zeit Integrals bereitgestellt, umfassend einen kriechfähigen Zugbalken und einen Kraft-Generator, der dazu ausgeführt ist, den kriechfähigen Zugbalken mit einer konstanten und wenigstens stückweise wegunabhängige Zugbeanspruchung zu beaufschlagen, so dass dieser ein Verschiebungssignal bereitstellt. Das bereitgestellte Verschiebungssignal ist die Längenänderung des Zugbalkens aufgrund des Kriechens.

Auf diese Weise wird somit ein mikromechanisches System bereitgestellt, das vollkommen energieautark und ohne elektrische Energieversorgung eine kontinuierliche Messung und Speicherung des Temperatur-Zeit Integrals an einem Prüfobjekt zulässt. Eine weiterer Aspekt der vorliegenden Erfindung besteht darin, den am mikromechanischen System vorliegenden zeitlichen Temperaturverlauf mikromechanisch über der Zeit zu integrieren und das Ergebnis der Integration als mechanische Größe, nämlich als Verschiebungssignal bereitzustellen. Weiterhin ermöglicht es die Erfindung, das gemessene und gespeicherte Temperatur-Zeit-Integral in eine elektrische Zustandsänderung zu wandeln und für eine elektrische Auswertung verfügbar zu machen. Die elektrische Zustandsänderung am Sensor ist dabei weitestgehend unabhängig von der vorliegenden Temperatur des Sensors beim Auslesen. Außerdem ermöglicht es die Erfindung, das mikromechanische System als integrierte mechanische Schaltung auf Waferlevel über Technologien der Mikrosystemtechnik in großen Stückzahlen fertigen zu können.

Das erfindungsgemäße mikromechanische System hat den Vorteil gegenüber bestehenden Messsystemen, dass keine kontinuierliche elektrische Energieversorgung für die Dauerüberwachung des Temperatur-Zeit Integrals mittels mikromechanischem Integrator notwendig ist und das System vollkommen energieautark eingesetzt werden kann. Das Mikrosystem kann somit losgelöst von Kabeln oder Batterien auch an bewegten Prüfobjekten montiert werden. Das erfindungsgemäße mikromechanische System hat zudem den Vorteil, dass die Sensitivität sowie der Messbereich durch die Wahl des Materials für den Zugbalken, die Geometrie des Zugbalkens und/oder die Dimensionierung der Kraftgenerators flexible eingestellt werden kann. Gegenüber einigen aus dem Stand der Technik bekannten Lösungen kann die erfindungsgemäße Vorrichtung den Temperaturverlauf auch über sehr lange Zeiträume, z.B. über Wochen, Monate oder Jahre, erfassen und integrieren. Das am mikromechanischen System erfasste und gespeicherte TTI kann einerseits optisch als auch elektronisch ausgelesen werden. Zur elektrischen Auslesung kann beispielsweise eine RFID-Schnittstelle genutzt werden. Das Verfahren zur Bestimmung des TTI basiert nicht auf einer chemischen Reaktion, sondern auf der Dehnung eines festen viskoelastischen Körpers. Vorzugsweise befinden sich in der erfindungsgemäßen Vorrichtung keine Flüssigkeiten, die aus der Vorrichtung austreten könnten.

Das erfindungsgemäße System ist zudem günstig in der Herstellung, da das Fertigungsprinzip auf standardisierter SOI-Technologie (SOI = Silicon on Insulator) der Mikrosystemtechnik beruht. Die Einzelprozesse der Fertigung können auf Wafer-Level erfolgen und liefern nach dem Vereinzeln des Wafers viele Chips. Die zur Herstellung verwendeten Materialien umfassen im Wesentlichen Silicium, Metalle, Gläser sowie Keramiken und Polymere, z.B. Fotolack. Die Sensorchip bergen kein erhöhtes Gesundheitsrisiko und können u.a. auch an Lebensmitteln eingesetzt werden, um dort das TTI bzw. die Kühlkette zu überwachen. Die Entsorgung der Sensorchips ist zudem umweltschonend.

Die vorliegende Erfindung stellt somit einen mikromechanischen Temperatur-Zeit-Integrator bereit, der es ermöglicht, einen zeitabhängigen Temperaturverlauf mechanisch zu integrieren und als Messgröße das Temperatur-Zeit-Integral bereitzustellt. Das Ergebnis der Integration wird über die Vorrichtung gespeichert und kann als elektrische Zustandsgröße bereitgestellt werden. Die elektrisch auslesbare Zustandsänderung wird über eine Struktur am Mikrosystem ermöglicht und ist weitestgehend von der Temperatur beim Auslesen unabhängig.

Die erfindungsgemäße Vorrichtung erlaubt bei kontinuierlicher elektrischer Energieversorgung eine kontinuierliche Abfrage des aktuell erreichten Temperatur-Zeit Integrals. Die Vorrichtung kann so ausgeführt werden, dass auch ohne elektrische Energieversorgung kontinuierlich das Temperatur-Zeit-Integral gemessen und gespeichert wird. Das gespeicherte Ergebnis kann dann zu einem beliebigen Zeitpunkt elektronisch, beispielsweise über RFID, ausgelesen werden. Die vorliegende Erfindung betrifft insbesondere ein mikromechanisches Messsystem zur passiven zeitlichen Integration des Temperatur-Zeit Verlaufs umfassend mindestens einen kriechfähigen Zugbalken, einen Kraft-Generator, einen mechanischen Verstärker und einen elektromechanischen Signalwandler.

Gemäß einer bevorzugten Weiterbildung der Erfindung umfasst das mikromechanische Messsystem einen mikromechanischen Aktor, der dazu ausgeführt ist, den Zugbalken zum Beginn einer Messung auszulenken und eine Verschiebung am Zugbalken einzuprägen. Gemäß einer bevorzugten Weiterbildung der Erfindung umfasst das mikromechanische Messsystem außerdem einen Rastmechanismus zur Fixierung der eingeprägten Verschiebung am Zugbalken. Gemäß einer bevorzugten Weiterbildung der Erfindung umfasst das mikromechanische Messsystem außerdem einen elektromechanischen Wandler, der die temperatur- und zeitabhängige Dehnung am kriechfähigen Zugbalken in ein elektrisches binäres Signal umwandelt. Dieser Wandler kann z.B. in Form eines mikromechanischen Analog-Digital-Wandlers oder in Form eines kapazitiven Wandlers umgesetzt werden.

Für das Verfahren zur Herstellung eines mikromechanischen Messsystems wird vorzugsweise ein Lithografie-Verfahren und/oder anisotropes Ätzen verwendet. Weiterhin bestehen die mechanischen Strukturen vorzugsweise aus Silicium bestehen. Außerdem ist es bevorzugt, dass der kriechfähige Zugbalken aus einem Polymer, Fotoresist, Glas, Metall oder einem viskoelastischen Lebensmittelbestandteil besteht.

Unter einem "kriechfähigen Zugbalken" im Sinne der vorliegenden Erfindung sind Bauelemente zu verstehen, die die Eigenschaft aufweisen, sich bei einer dauerhaft anliegenden mechanischen Spannung zu dehnen, wobei die Ausprägung der Dehnung sowohl von der vorliegenden Temperatur, der Zeit, als auch der mechanischen Spannung abhängig ist.

Unter einem "Kraft-Generator" im Sinne der vorliegenden Erfindung wird ein Bauteil verstanden, das die Aufgabe erfüllt, eine definierte Kraft am Zugbalken bereitzustellen, die vorzugsweise konstant und stückweise wegunabhängig ist oder eine definierte Kraft-Weg Kennlinie aufweist, um nicht-lineare viskoelastische Effekte am kriechfähigen Zugbalken auszugleichen.

Unter einem "mechanischen Verstärker" im Sinne der vorliegenden Erfindung wird ein Bauteil verstanden, das die Aufgabe erfüllt, eine initial geringe translatorische Verschiebung in eine translatorische Verschiebung mit hoher Amplitude bzw. Verschiebung zu wandeln, um so eine sensitive Auflösung der Dehnung zu ermöglichen.

Unter einem "elektromechanischen Signalwandler" im Sinne der vorliegenden Erfindung wird ein Bauteil verstanden, das die Aufgabe erfüllt, die Verschiebung am Ausgang des Verstärkers in eine elektrische Zustandsänderung oder direkt in ein elektrisches Signal zu wandeln.

Unter einem "mikromechanischen Aktor" im Sinne der vorliegenden Erfindung wird eine Vorrichtung oder ein Bauteil verstanden, das die Aufgabe erfüllt, eine Kraft und/oder eine Verschiebung zu generieren.

Unter einem "Rastelement" im erfindungsgemäßen Sinne wird ein Bauteil verstanden, das die Aufgabe erfüllt, eine, z.B. durch den mikromechanischen Aktor, eingeprägte Verschiebung am kriechfähigen Zugbalken gegenüber dem Gestell zu fixieren, sodass der Aktor nicht dauerhaft betrieben werden muss.

Unter einem "Prüfobjekt" im erfindungsgemäßen Sinne wird ein Objekt verstanden, an dem das Temperatur-Zeit-Integral überwacht werden soll.

Unter einer "elektrischen Zustandsänderung" im erfindungsgemäßen Sinne wird die Variation einer elektrisch messbaren Größe verstanden. Hierzu zählt nicht ausschließlich eine Kapazitätsänderung, eine Widerstandsänderung eine Induktivitätsänderung oder das Schalten elektrischer Kontakte.

Unter "Fertigungsverfahren der Mikrosystemtechnik" werden Fertigungsprozesse verstanden, die für die Herstellung von Mikrosystemen verwendet werden und eine parallele Fertigung vieler Mikrosysteme auf Wafer-Level erlauben. Zu den Fertigungsverfahren gehören unter anderem Lithografie, reaktives Ionentiefätzen sowie PVD-Verfahren (PVD = Physical Vapor Deposition, physikalische Gasabscheidung).

Nachfolgend wird die Erfindung anhand bevorzugter Ausführungsbeispiele unter Bezugnahme auf die Zeichnungen näher erläutert. In den Zeichnungen zeigen

Fig. 1:     exemplarische Temperatur-Zeit-Verläufe und Darstellung des Temperatur-Zeit-Integrals,

Fig. 2:     eine Darstellung des Kriecheffekts an einem beanspruchten kriechfähigen Zugbalken und eine Darstellung der zeit- und temperaturabhängigen Längenänderung des Zugbalkens,

Fig. 3:     Komponenten eines mikromechanischen Messsystems,

Fig. 4:     eine bevorzugte Ausführungsform des mikromechanischen Messsystems,

Fig. 5:     ein Burger-Modell zur Modellierung des viskoelastischen Verhaltens an einem beanspruchten Zugbalken,

Fig. 6:     A) eine bevorzugte Ausführung eins Kraft-Generators; B) die dauerhafte Auslenkung des Zugbalkens und Fixierung über die Fixiereinheit unmittelbar nach Einprägung der Auslenkung; C) den Kraft-Generator und die Zugbalken zu einem späteren Zeitpunkt wenn der Zugbalken eine Längenänderung erfahren hat; D) einen konstanten Kraft-Weg Verlauf des Kraft-Generators basierend auf dem Kraft-Weg Verlauf der Knickfedern und der linearen Federn,

Fig. 7:     A) eine weitere bevorzugte Ausführungsform des Messsystems umfassend eine Kupplung und Führungsfedern; B) den Einfluss der Kupplung auf die Kraft-Weg Kennlinie des Kraft-Generators,

Fig. 8:     A) eine Darstellung des kriechfähigen Zugbalkens im initialen und gedehnten Zustand; B) die Anpassung der Kraft-Weg-Kennlinie des Kraft-Generators zur Berücksichtigung der variierenden Querschnittsfläche bei zunehmender Dehnung,

Fig. 9:     eine mögliche Ausführungsform des Kraft-Generators über Mikromagnete,

Fig. 10:    A) eine bevorzugte Ausführungsform des mikromechanischen Aktors in Form eines elektrostatischen Aktors. B, C) Darstellungen des Ablaufs beim Starten einer TTI-Messung: Aktivieren des Aktors durch externes Signal (B) und Fixierung und Einprägung einer definierten Verschiebung am Zugbalken über die Fixiereinheit (C),

Fig. 11:    eine weitere bevorzugte Ausführungsform des mikromechanischen Aktors in Form eines magnetischen Reluktanzaktors,

Fig. 12:    eine eitere bevorzugte Ausführungsform des mikromechanischen Aktors in Form eines magnetischen Aktors mit polarisiertem Mikromagneten,

Fig. 13:    A) eine weitere bevorzugte Ausführungsform des mikromechanischen Aktors in Form eines thermischen Multi-Morph-Aktors; B) eine Darstellung der Aktivierung des Aktors durch Überschreitung/Unterschreitung einer kritischen Temperatur,

Fig. 14:    eine bevorzugte Ausführungsform eines mikromechanischen Wegverstärkers,

Fig. 15:    eine bevorzugte Ausführungsform des Messsystems mit kapazitivem Wandler in einer Kammstruktur,

Fig. 16:    eine weitere bevorzugte Ausführungsform des Messsystems mit kapazitivem Wandler am Kraft-Generator,

Fig. 17:    eine weitere bevorzugte Ausführungsform des Messsystems mit mikromechanischem A/D-Wandler,

Fig. 18:    eine weitere bevorzugte Ausführungsform des Messsystems mit mikromechanischem A/D-Wandler und angeschlossener Funkvorrrichtung,

Fig. 19:    eine weitere bevorzugte Ausführungsform des elektromechanischen Wandlers in Form eines piezoresistiven Wandlers am Kraft-Generator,

Fig. 20:    einen bevorzugten Schichtaufbau des mikromechanischen Messsystems und

Fig. 21:    einen bevorzugten Fertigungsablauf des mikromechanischen Messsystems.

Bei der erfindungsgemäßen Vorrichtung handelt es sich um ein Mikrosystem, das sich über Fertigungsverfahren der Mikrosystemtechnik in großen Stückzahlen auf Wafer-Level herstellen lässt und in viele Chips vereinzelt werden kann. Abmessungen der Chips liegen vorzugsweise im Bereich von 1 $\mu$m bis 10 mm.

Das Prinzip der passiven Integration des Temperatur-Zeit-Verlaufs basiert auf dem physikalischen Effekt, dass kriechfähige Stoffe z.B. thermoplastische Polymere, Gläser, Fotoresiste, spezifische Lebensmittelbestandteile usw. bei dauerhafter mechanischer Beanspruchung kriechen und eine Dehnung erfahren. Kriecheffekte sind i.d.R. stark von der Temperatur, der Zeit und der mechanischen Beanspruchung abhängig.

Fig. 2 soll diesen Vorgang verdeutlichen: Ein einseitig eingespannter kriechfähiger Zugbalken 400 wird über eine konstante mechanische Zugspannung $\sigma_0$ dauerhaft beansprucht. Gleichzeitig wirkt eine Temperatur T. Der Zugbalken 400 dehnt sich in Abhängigkeit der Zeit aus. Er wird in Richtung der Zugbeanspruchung gedehnt und es ergibt sich eine Längenänderung $\Delta L$. Das Diagramm in Fig. 2 deutet an, dass die Dehnung bzw. die Längenänderung sowohl temperaturals auch zeitabhängig ist und die gleiche Dehnung $\varepsilon_1$ bei hoher Temperatur und kurzer Zeit oder niedriger Temperatur und langer Zeit erreichbar ist. Idealerweise ist das TTI der beiden vorliegenden Temperaturverläufe identisch somit lässt sich die erreichte Dehnung am Zugbalken einem zu messenden TTI zuordnen.

Die erfindungsgemäße Vorrichtung und das erfindungsgemäße Verfahren beruhen daher darauf, den Kriecheffekt in einer mikromechanischen Vorrichtung zu nutzen, um das Temperatur-Zeit-Integral zu erfassen. Als Indikator für das erfasste Temperatur-Zeit Integral wird die resultierende Dehnung an einem dauerhaft beanspruchten kriechfähigen Zugbalken 400 herangezogen. Die mechanische Beanspruchung des kriechfähigen Zugbalkens 400 soll während einer Messung möglichst nicht variieren, um die alleinige Abhängigkeit des Kriechens von der Variation der Temperatur und Zeit zu fördern. Zur Entkopplung des Kriecheffekts von einer möglichen Variation der mechanischen Beanspruchung wird ein Kraft-Generator 500 bereitgestellt, der dazu ausgeführt ist, eine kontinuierliche und konstante Beanspruchung am kriechfähigen Zugbalken 400 bereitzustellen.

Wesentlich ist es zudem, geringe Dehnungen am kriechfähigen Werkstoff mechanisch zu verstärken, um diese in ein größeres Verschiebungssignal zu wandeln. Zudem soll die vorzugsweise verstärkte Dehnung des kriechfähigen Werkstoffs über einen elektromechanischen Wandler 700 in ein elektrisches Signal gewandelt werden können. Ein weiterer Aspekt der Erfindung besteht zudem darin, einen Aktor 200 bereitzustellen, der dazu ausgeführt ist, durch ein äußeres Signal den Beginn einer Messung zu aktivieren.

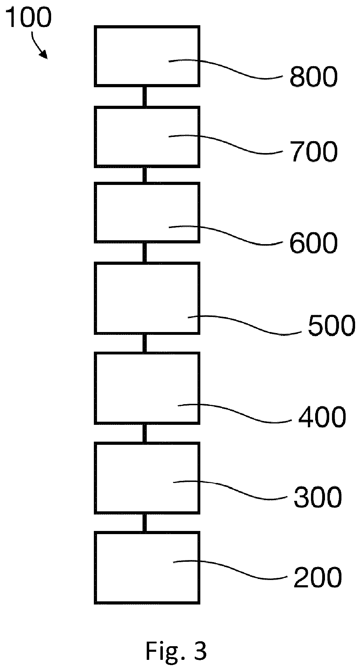

Fig. 3 zeigt die Hauptkomponenten eines mikromechanischen Messsystems 100 zur Erfassung eines Temperatur-Zeit Integrals gemäß einem bevorzugten Ausführungsbeispiel der Erfindung umfassend einen kriechfähigen Zugbalken 400, der auf einer Seite direkt oder indirekt mit einem Kraft-Generator 500 und weiterhin mit einem mikromechanischen Verstärker 600 sowie einem elektromechanischen Signalwandler 700 verbunden ist. Die andere Seite des kriechfähigen Zugbalkens ist direkt oder indirekt mit einem Rastelement 300 und einem mikromechanischen Aktor 200 verbunden. Diese Anordnung ist nur beispielhaft; andere Anordnung der Komponenten ist ebenfalls denkbar.

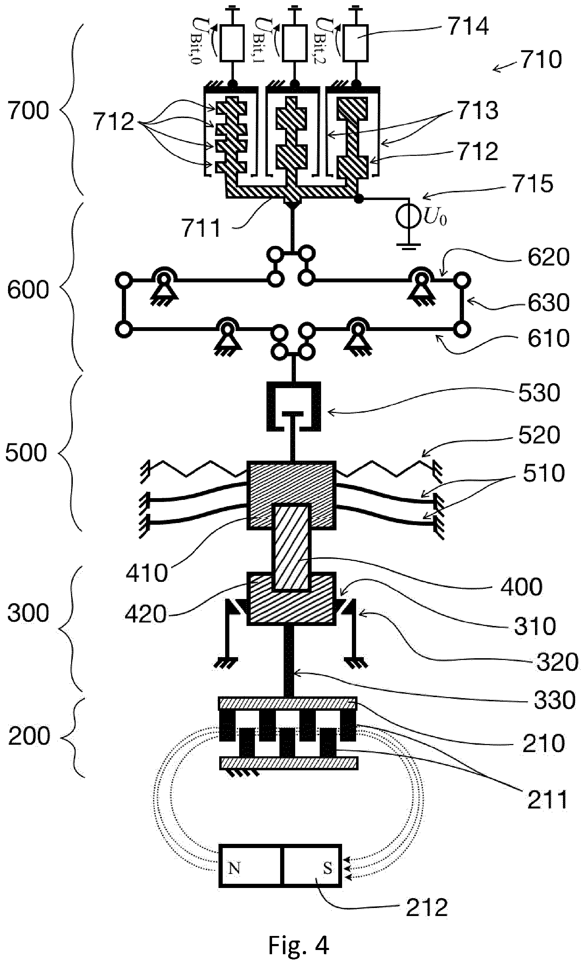

Fig. 4 zeigt eine bevorzugte Ausführungsform des mikromechanischen Messsystems 100. Die Messung des Temperatur-Zeit-Integrals wird zunächst über die Aktivierung des mikromechanischen Aktors 200 gestartet. Das Einschalten des Aktors 200 erfolgt entweder durch ein äußeres Signal oder durch Überschreitung oder Unterschreitung einer kritischen Temperatur. Durch Aktivierung des Aktors 200 erzeugt dieser eine Kraft und sorgt dafür, dass zunächst das Rastelement 310 und der daran befindliche Zugbalkens 400 ausgelenkt werden. Dabei wird eine definierte Rastposition erreicht und dann überschritten, sodass das Rastelement 310 über Sperrklingen 320 am Gestell 900 dauerhaft fixiert bleibt und somit auch bei Deaktivierung des Aktors 200 eine dauerhafte Auslenkung am Zugbalken 400 eingeprägt bleibt.

Durch die definierte Auslenkung des Zugbalkens 400 wird durch den Kraft-Generator 500 eine Kraft generiert und an den Zugbalken übertragen. Der Zugbalken wird dabei vorzugsweise kontinuierlich und konstant auf Zug beansprucht. Durch die anliegende Zugspannung beginnt der Zugbalken in Abhängigkeit von Zeit und Temperatur mechanische zu kriechen und dehnt sich dabei aus.

Würde der Kraft-Generator 500 in Form einer linearen Feder umgesetzt, so würde die Kraft und damit die Zugspannung mit zunehmender Dehnung des Zugbalkens abnehmen, da die Feder zunehmend entspannt würde. Die Zugbeanspruchung wäre damit nicht konstant und der Kriecheffekt wäre neben der Temperatur und der Expositionszeit auch von der bereits erreichten Dehnung des Zugbalkens abhängig. Das TTI ließ sich so folglich nicht eindeutig bestimmen. In einer bevorzugten Ausführungsform ist der Kraft-Generator 500 insofern dazu ausgeführt eine von der Dehnung des Zugbalkens unabhängige bzw. konstante Kraft zu generieren bzw. eine derartige Kraft zu generieren, die zu einer konstanten Beanspruchung am Zugbalken führt. Der Zugbalken wird somit unabhängig von seiner erreichten Dehnung mit einer konstanten Zug-Spannung beansprucht, wodurch die Dehnung des Zugbalkens bei konstanter mechanischer Spannung maßgeblich von Zeit und Temperatur abhängig ist. Mit zunehmender Dehnung können am Zugbalken dehnungsabhängige Kriecheffekte auftreten, beispielsweise verändert sich die Querschnittsfläche des Zugbalkens und somit bei konstanter Kraft auch die Stärke der Zugbeanspruchung. Der Kraft-Generator kann dazu ausgelegt sein, eine Kraft-Weg Kennlinie aufzuweisen, die auf die dehnungsabhängigen Kriecheffekte am Zugbalken angepasst ist, um beispielsweise eine dehnungsabhängige Beanspruchung zu kompensieren.

Die am Zugbalken 400 erreichte Dehnung lässt sich dem erreichten Temperatur-Zeit-Integral zuordnen. Je größer die Dehnung bzw. je größer die Längenänderung am Zugbalken, desto größer ist auch das Temperatur-Zeit-Integral.

Eine Dehnung und damit eine Längenänderung des Zugbalkens ist in der Regel klein gegenüber der Balkenlänge und liegt typischerweise im Bereich von 0 bis 10%. Zur Erhöhung der Sensitivität wird in einer bevorzugten Ausführungsform am Zugbalken 400 ein mechanischer WegVerstärker 600 montiert, der dazu ausgeführt ist, eine kleine Dehnung bzw. Längenänderung am Zugbalken in eine größere Verschiebung am Ausgang zu transformieren. Die verstärkte Verschiebung kann einerseits visuell ausgelesen werden, andererseits kann die Verschiebung über einen elektromechanischen Wandler 700 in ein elektrisches Signal bzw. in eine elektrische Zustandsänderung überführt werden, was zu einem beliebigen Zeitpunkt dann z.B. über RFID ausgelesen werden kann.

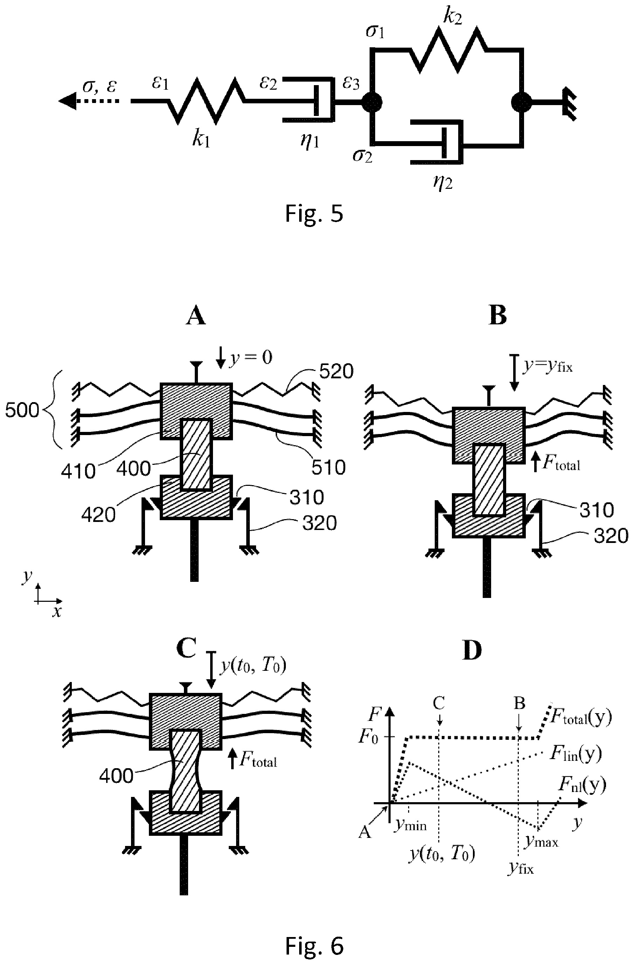

Vorzugsweise wird der kriechfähige Zugbalken 400 aus einem viskoelastischen Werkstoff gefertigt. Hierzu gehören u.a. Polymere, Fotoresiste und Gläser. Die Dehnung des Zugbalkens in Abhängigkeit der Temperatur, der Zeit und der eingeprägten mechanischen Spannung lässt sich über das Burger-Modell beschreiben. Das Modell wird in Fig. 5 gezeigt und ist aus der Polymertechnik bereits für verschiedene Anwendungen bekannt. Es berücksichtigt einerseits das elastische Verhalten, das irreversible viskose Verhalten und das reversible Relaxationsverhalten von viskoelastischen Materialien. Für das in Fig. 5 gezeigte Modell lässt sich die Dehnung $\varepsilon_1 t$ in Abhängigkeit der Zeit $t$ bei konstanter Zugbeanspruchung $\sigma_0$ ermitteln:

$$\varepsilon_1 t = \frac{\sigma_0}{k_1} + \frac{\sigma_0}{\eta_1} t + \frac{\sigma_0}{k_1}\left(1 - e^{-\frac{k_2}{\eta_2}t}\right) \qquad\qquad 1$$

Bei den Federsteifigkeiten $k_{1,2}$ und den Viskositäten $\eta_{1,2}$ handelt es sich um materialspezifische Materialparameter.

Die Materialparameter innerhalb des Modells sind auch von der Temperatur $T$ abhängig. insbesondere die Viskositäten $\eta_1$ und $\eta_2$. Der Temperatureinfluss auf die Viskosität und das Kriechmodul lässt sich nahe der Glasübergangstemperatur mit Hilfe der WLF-Gleichung Williams-Landel-Ferry Gleichung berechnen [4]:

$$\log a_t = \log\left(\frac{\eta}{\eta_0}\right) = \frac{-C_1\, T - T_s}{C_2 + T - T_s} \qquad\qquad 2$$

Der Faktor $a_t$ beschreibt den Verschiebungsfaktor zur Referenztemperatur. Die Standardreferenztemperatur $T_s$ sollte etwa 50 °C oberhalb der Glasübergangstemperatur gewählt werden. Die Formel ist bis ca. 100 K oberhalb der Glasübergangstemperatur gültig. Die Parameter $C_1$, $C_2$ sind zwar nicht allgemeingültig, können jedoch für viele Polymer-Werkstoffe genutzt werden. Für sie gilt $C_1$ = 17.44 und $C_2$ = 51.6K.

Die Aufgabe des Kraft-Generators 500 besteht darin, den kriechfähigen Zugbalken 400 mit einer derartigen Kraft zu belasten, die am Zugbalken 400 eine konstante bzw. an das Kriechverhalten angepasste Zugspannung $\sigma_0$ ergibt. Ziel ist es, die mechanische Spannung am Zugbalken dauerhaft konstant zu halten. Die Nutzung einer vorgespannten linearen Feder als Kraft-Generator ist zwar denkbar, hat jedoch den Nachteil, dass mit zunehmender Dehnung des Zugbalkens 400 und folglich mit zunehmender Entlastung der Feder die eingeprägte Kraft reduziert wird. Die Beanspruchung $\sigma_0$ wäre dann nicht mehr konstant, sondern selbst abhängig von der bereits erreichten Dehnung $\sigma\varepsilon$ des Zugbalkens 400. Zur Erfassung des Temperatur-Zeit Integrals ist jedoch eine konstante Beanspruchung des Zugbalkens vorteilhaft, sodass die Dehnung des Zugbalkens nicht von der bereits erreichten Dehnung, sondern allein von der Temperatur und der Expositionsdauer abhängig ist.

Fig. 6A zeigt eine bevorzugte Ausführungsform eines Kraft-Generators 500, der über ein nichtlineares Federsystem verfügt und dazu ausgeführt ist, eine konstante Kraft bzw. eine konstante Beanspruchung am Zugbalken 400 einprägen zu können. Zur Umsetzung des Kraft-Generators 500 sind beispielsweise Knickfedern 510 geeignet, die eine Federkennlinie mit stückweise negativer Steigung aufweisen. Fig. 6D zeigt den typischen Kennlinienverlauf der Kraft-Weg-Kennlinie $F_{n1}y$ einer solchen Feder. Die negative Steigung lässt sich auch als negative Federkonstante verstehen. Durch Kombination von Knickfedern 510 mit linearen Federn 520 lässt sich die negative Federsteifigkeit der Knickfedern 510 mit der positiven Federsteifigkeit der linearen Feder 520 kompensieren, sodass sich eine stückweise konstante und wegunabhängige Federkraft ergibt. Fig. 6D zeigt anhand eines Kraft-Weg,Diagramms wie sich die Federkennlinien der linearen Feder $F_{lin}y$ und der Knickfeder $F_{n1}y$ summarisch in einer stückweise wegunabhängigen Federkennlinie $F_{total}y$ mit konstanter Rückstellkraft ergeben. Für den in Fig. 6D gezeigten Bereich von $y_{min}$ bis $y_{max}$ wird über den Kraft-Generator die konstante Kraft $F_0$ bereitgestellt.

Denkbar ist auch, dass der Kraft-Generator 500 weitere Federn unabhängig von ihrer Position und Anordnung im Mikrosystem umfasst. So können beispielsweise lineare Führungsfedern, die sich am elektromechanischen Wandler befinden, ebenfalls zur Kompensation der negativen Federsteifigkeit der Knickfedern 510 beitragen. Auch die Eingangssteifigkeit des mechanischen Wegverstärkers 600 kann zur Krafterzeugung beitragen.

Das Zusammenspiel zwischen dem Kraft-Generator 500 und dem kriechfähigen Zugbalken 400 wird ebenfalls in Fig. 6 demonstriert: Zunächst zeigt Fig. 6B wie der Zugbalken initial ausgelenkt und die Auslenkposition über die Rastzähne 310 und Sperrklingen 320 dauerhaft fixiert wird. Die Auslenkung wird über den Zugbalken auf den Kraft-Generator übertragen. Hierbei wird eine Verschiebung $y_{fix}$ am Kraft-Generator 500 eingeprägt, wodurch dieser eine konstante bzw. an das Kriechverhalten angepasste Kraft $F_{total}y_{fix} = F_0$ zur Verfügung stellt (vgl. Stelle B im Kraft-Weg Diagramm von Fig. 6D).

In Abhängigkeit von Zeit und Temperatur dehnt sich der kriechfähige Zugbalken 400 entsprechend der Zugbeanspruchung in y-Richtung aus, wie in Fig. 6C gezeigt. Die initiale Verschiebung $y_{fix}$ am Kraft-Generator 500 wird hierbei folglich verändert bzw. reduziert. Da die durch den Kraft-Generator bereitgestellte Kraft in den Grenzen zwischen $y_{min}$ bis $y_{max}$ vorzugsweise konstant und wegunabhängig ist, wirkt am Zugbalken für die erreichte Verschiebung $y_{t0}$, $T_0$ weiterhin die konstante Kraft $F_0$, wie in Fig. 6D gezeigt.

Der Aufbau des Kraft-Generators 500 ist anstelle von Knickfedern 510 auch mit nicht-linearen Federn denkbar, die bereits eine konstante und/oder wegunabhängige Kraft aufweisen. Hierzu gehören beispielsweise multimodale Federsysteme, wie sie aus Vysotskyi, B., et al., *Engineering the structural nonlinearity using multimodal-shaped springs in MEMS. Journal of Microelectromechanical Systems*, 2018. 27(1): S. 40-46 bekannt sind, oder Dreiecksfedern, die eine initiale Kippung aufweisen und aus Schmitt, P., L. Schmitt, N. Tsivin und M. Hoffmann, Highly Selective Guiding Springs for Large Displacements in Surface MEMS. Journal of Microelectromechanical Systems, 2021. 30(4): S. 597-611 bekannt sind. Anstelle von zusätzlichen linearen Federn 520, die zur Kompensation der negativen Federsteifigkeit von Knickfedern 510 benötigt werden, kann auch die Eingangssteifigkeit eines mechanischen Verstärkers 600 genutzt werden. Dieser weist aufgrund verbauter Festkörpergelenke ebenfalls einen Federcharakter auf.

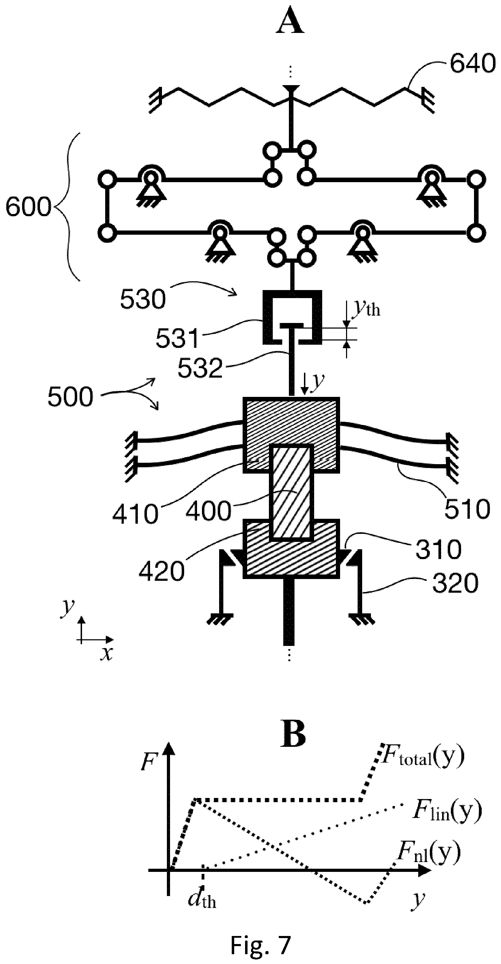

Fig. 7A zeigt diesbezüglich eine weitere bevorzugte Ausführungsform des Kraft-Generators 500, wobei ein mechanischer Wegverstärker 600 sowie zusätzliche Führungsfedern 640 ebenfalls summarisch zur Kraftgeneration beitragen. Zusätzlich umfasst die Anordnung eine Kupplung 530, die dazu ausgeführt ist, den Kraft-Weg-Verlauf der Knickfedern 510 zu beschneiden.

Die Knickfedern 510 sind hier direkt am ersten Verbindungselement 410 montiert. Die linearen Federn, hier gebildet durch den Wegverstärker 600 und die Führungsfedern 640, sind über eine Kupplung 530 mechanisch vom ersten Verbindungselement 410 und damit von den Knickfedern 410 getrennt. Der nicht-lineare Verlauf der Kraft-Weg-Kennlinie der Knickfedern wird in Fig. 7B skizziert. Beim initialen Auslenken des Zugelements 400 wird der erste Anteil der Kraftreaktion seitens der Knickfedern 510 im Bereich zwischen $y = 0$ und $y < y_{tn}$ nicht an den mechanischen Verstärker 600 übertragen, die Kupplung sogt hier für eine Entkopplung zwischen Verstärker und nicht-linearer Feder. Erst wenn eine größere Verschiebung $y \geq y_{th}$ am ersten Verbindungselement 410 vorliegt, wird über die Kupplung 530 ein mechanischer Kontakt zwischen dem ersten Verbindungselement 410 und dem Eingang des Verstärkers 600 hergestellt. Folglich setzt die Kraftreaktion der nachgeschalteten linearen Federn 600, 640 erst ab Überwindung von $y \geq y_{th}$ ein. Fig. 7B zeigt wie sich die resultierende Gesamtkraft $F_{total}(y)$ am Zugbalken 400 in Abhängigkeit der Verschiebung $y$ summarisch durch die Kraft-Weg-Kennlinie $F_{n1}(y)$ der Knickfedern und der um $y_{th}$ versetzt wirkenden linearen Federkraft $F_{lin}(y)$ der nachgeschalteten Federn zusammensetzt. Ein Vorteil der Kupplung besteht folglich darin, dass sich die resultierende Kraft $F_{total}(y)$ manipulieren lässt. Weiterhin werden nur Verschiebungssignale y an den mechanischen Wegverstärker übertragen, die mit dem konstanten Kennlinenverlauf $F_{total}(y)$ ab $y \geq y_{th}$ assoziiert werden.

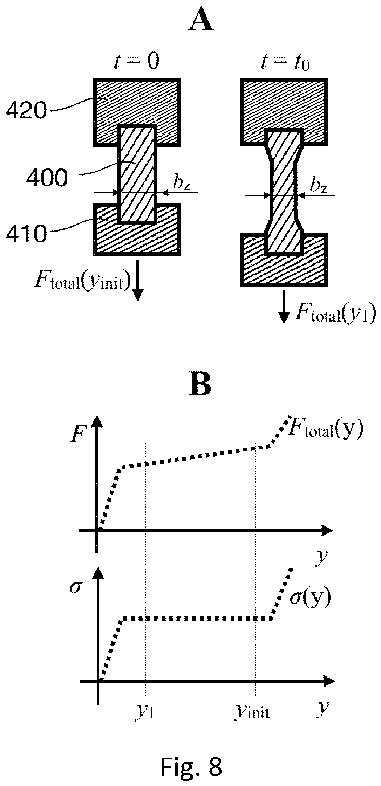

Eine Aufgabe des Kraft-Generators besteht darin eine Kraft bereitzustellen, die eine konstante Beanspruchung am Zugbalken bewirkt. In Abhängigkeit des Materials und der Geometrie des Zugbalkens muss die bereitgestellte Kraft hierzu nicht zwangsläufig konstant sein, sondern sollte auch Änderungen in der Beschaffenheit des Zugbalkens kompensieren. Fig. 8A zeigt exemplarisch, wie der Zugbalken mit zunehmender Längenausdehnung seine Breite $b_z$ und damit Querschnittsfläche ändert. Fig 8B zeigt, wie die durch den Kraft-Generator bereitgestellte Kraft derartig angepasst wird, dass die Verringerung der Querschnittsfläche berücksichtigt wird, um eine konstante Zugbeanspruchung $\sigma$ am Zugbalken zu gewährleisten.

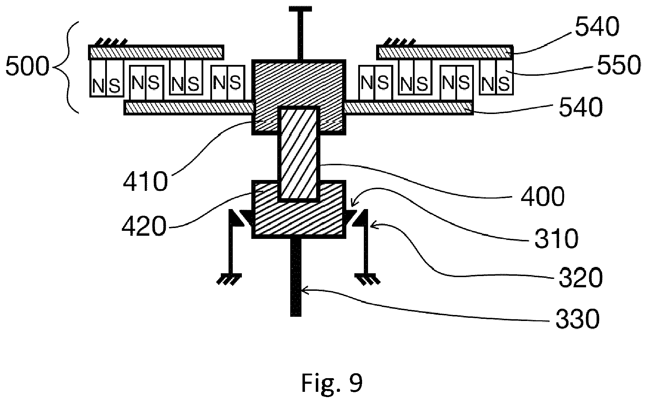

Vorliegend ist es so, dass die Umsetzung des Kraft-Generators nicht zwangsläufig über Federn umgesetzt werden muss, sondern auch über elektrostatische Aktoren oder Mikromagnete möglich ist. Fig. 9 zeigt exemplarisch Mikromagnete 550 die über Magnethalter 540 montiert sind und in einer Kammstruktur angeordnet sind. Ein Teil der Kammstruktur ist hier gestellfest, während der zweite Teil über das erste Verbindungselement 410 mit dem Zugbalken 400 verbunden ist. Durch die Reluktanzkraft der Mikromagnete 550 wird hier eine vom Weg unabhängige Kraft generiert, die auf den Zugbalken 550 übertragen wird.

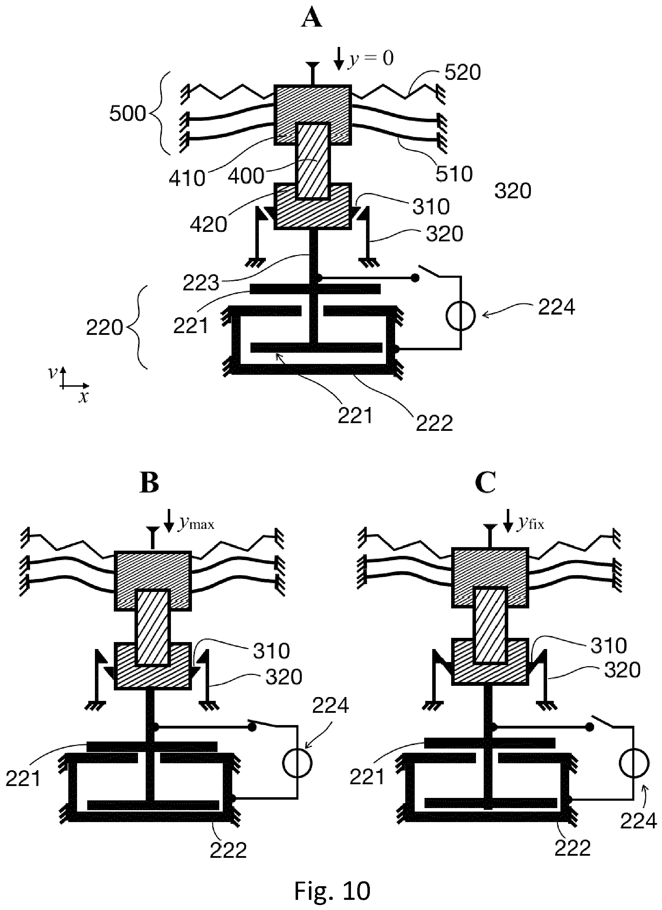

Zur Initialisierung des mikromechanischen Messsystems und zum Starten der Messung des Temperatur-Zeit-Integrals ist ein Aktor vorgesehen, der vorzugsweise am Mikrosystem integriert ist und dazu ausgeführt ist, den Zugbalken auszulenken. Der Aktor muss dabei die vom Kraft-Generator generierte Kraft überwinden und den Zugbalken derart auslenken, dass eine definierte Auslenkung über das Rastelement dauerhaft fixiert werden kann. Als Aktor eignen sich u.a. elektrostatische, elektrothermische und/oder magnetische Aktoren. Solche Aktoren können über ein äußeres Signal aktiviert werden. Auch Bi-Morphe oder Formgedächtnisaktoren sind für die Initialisierung des Messsystems denkbar. Fig. 10 zeigt eine bevorzugte Ausführungsform der Komponenten: Aktor 200, Rastelement 300, Zugbalken 400 und Kraft-Generator 500, wobei als Aktor ein elektrostatischer Parallelplattenaktor 220 genutzt wird. Der Parallelplattenaktor 220 ist hier mit dem zweiten Verbindungselement 420 verbunden. Beim Anlegen einer elektrischen Spannung durch eine externe Spannungsquelle 224 wird eine Kraft am Aktor generiert und das Verbindungselement 420 wird ausgelenkt, wie in Fig 10B dargestellt. Dabei überwinden die Rastelemente 310 die zugehörigen gestellfesten Sperrklingen 320. Beim Deaktivieren des Aktors bewegt sich der Verbindungselement 420 samt Zugbalken 400 stückweise in Richtung der Ausgangsposition bis zum Erreichen einer definierten Rastposition zurück. Die dauerhafte Auslenkung wird über die Sperrklingen 320 und Rastelemente 310 fixiert, wie in Fig 10C gezeigt wird.

Anstelle eines elektrostatischen Aktors ist auch die Integration eines elektrothermischen Aktors denkbar wie sie aus Schomburg, W.K., Introduction to Microsystem Design. 2011: Springer bekannt.

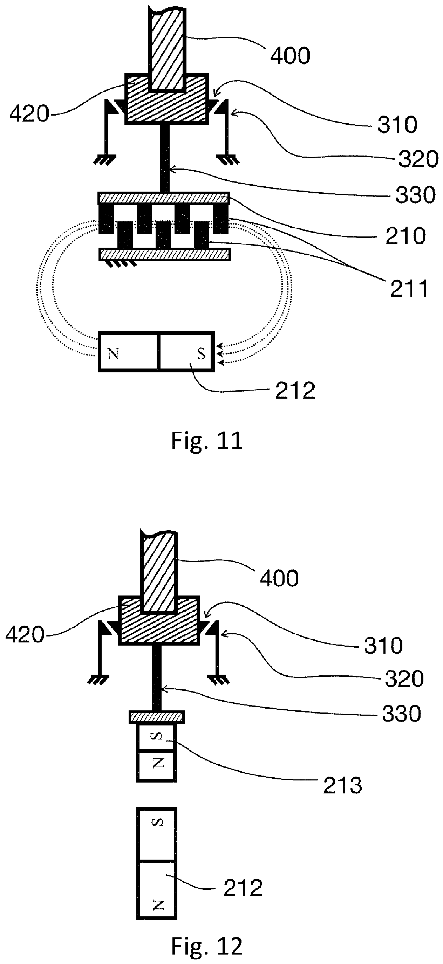

Fig. 11 zeigt eine alternative Ausführungsform des Aktors, wobei der Aktor auf einem magnetischen Prinzip basiert. Hierzu sind in einer bevorzugten Ausführungsform Aktorfinger 211 aus einem magnetischen Werkstoff in einer Kammanordnung angeordnet. Die Kraft am Aktor wird durch ein äußeres Magnetfeld eines externen Magneten 212 am Mikrosystem eingeleitet. Dabei werden die Aktorfinger 211 ineinander gezogen.

Fig 12 zeigt eine weitere Ausführung eines magnetischen Aktors, bei dem mindestens ein polarisierter Mikromagnet 213 genutzt wird, der durch ein äußeres Magnetfeld eines externen Magneten 212 ausgelenkt wird.

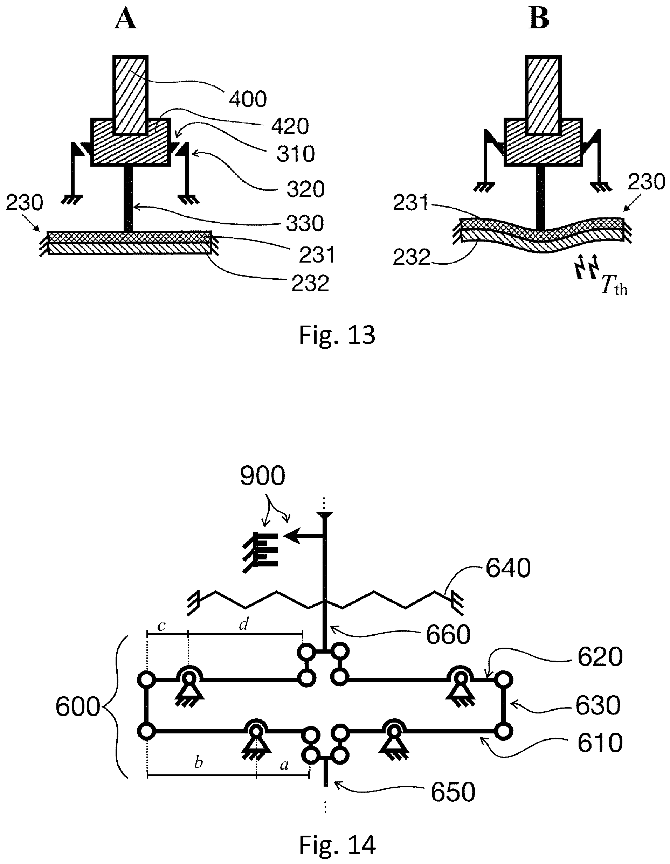

Fig. 13 zeigt eine weitere bevorzugte Ausführungsform, bei welcher der Aktor als Multi-Morph 320 umgesetzt ist. Der Aktor ist dazu ausgeführt, bei Überschreitung oder bei Unterschreitung einer kritischen Temperatur $T_{th}$ den Zugbalken 400 und das Rastelement 310 soweit auszulenken, dass eine Fixierung der Position über das Rastelement 310 und die Sperrklinge 320 gewährleistet wird. Zur Umsetzung eines thermischen Multi-Morph Aktors können beispielsweise ein erstes 231 und ein zweites Balkenelement 232 mit je unterschiedlichen Wärmeausdehnungskoeffizienten genutzt werden. Aufgrund der unterschiedlichen Wärmeausdehnung wird eine Kraft und/oder eine Verschiebung erreicht. Anstelle eines Multi-Morphs ist auch die Integration eines Formgedächtnis-Aktors, z.B. in Form eines Drahtes, basierend auf einem Formgedächtnismaterial denkbar.

Fig. 14 zeigt einen möglichen Aufbau des mikromechanischen Wegverstärkers 600. In einer bevorzugten Ausführungsform umfasst der Mechanismus symmetrische angeordnete Hebel 610, 620, die gegenüber dem Gestell rotatorisch gelagert sind und deren Enden jeweils seriell mit weiteren Hebeln über einen Hebelverbinder 630 verbunden sind. Eine Verschiebung $y_{in}$ am Eingangselement 650 wird über den Hebelmechanismus in Abhängigkeit der Segmentlängen a, b, c, d um den Verstärkungsfaktor $A_{total}$ vergrößert und am Ausgangselement 660 als Ausgangsverschiebung $y_{out}$ bereitgestellt:

$$A_{\text{total}} = \frac{y_{\text{out}}}{y_{\text{in}}} \approx \frac{b}{a} \cdot \frac{d}{c} \qquad\qquad 1$$

Durch viele kaskadierte Hebel ist es möglich, hohe Verstärkungsfaktoren zwischen 1 bis 500 zu erreichen.

Die Drehgelenke am Wegverstärker 600 werden vorzugsweise in Form von Festkörpergelenken umgesetzt. Diese sind dadurch gekennzeichnet, dass sie eine zum Drehwinkel proportionale Kraft- bzw. Momententenreaktion aufweisen. Eine eingeprägte Verschiebung $y_{in}$ am Eingang 650 des Wegverstärkers führt folglich zu einer rückstellenden Kraftreaktion $F_{in}$. Der Eingang des Verstärkers wirkt dann wie eine Feder mit einer Federkonstante $c_{in}$:

$$c_{\text{in}} = \frac{F_{\text{in}}}{y_{\text{in}}} \qquad\qquad 2$$

Der Federcharakter des mechanischen Wegverstärkers kann kombinatorisch mit dem Kraft-Generator 500 zusammen genutzt werden, um eine konstante Kraft zu generieren, wie weiter oben beschrieben. Zur Umsetzung eines mechanischen Wegverstärkers sind auch Mechanismen denkbar, die auf Basis von Kurvenscheiben anstelle von Drehgelenken basieren.

Da der mechanische Wegverstärker geringe Verschiebungen in große Verschiebungen transferiert, kann am Ausgang des mechanischen Verstärkers eine zusätzliche visuelle Auswerteeinheit 900 angebracht werden, die dazu ausgeführt ist, das verstärkte Verschiebungssignal visuell zu erfassen. Eine solche visuelle Auswerteeinheit 900 kann beispielsweise eine Skala beinhalten, die es erlaubt, mit dem bloßen Auge oder mit Hilfe eines Mikroskops oder einer Lupe die Verschiebung am Ausgang des Verstärkers in Referenz zum Gestell sichtbar zu machen.

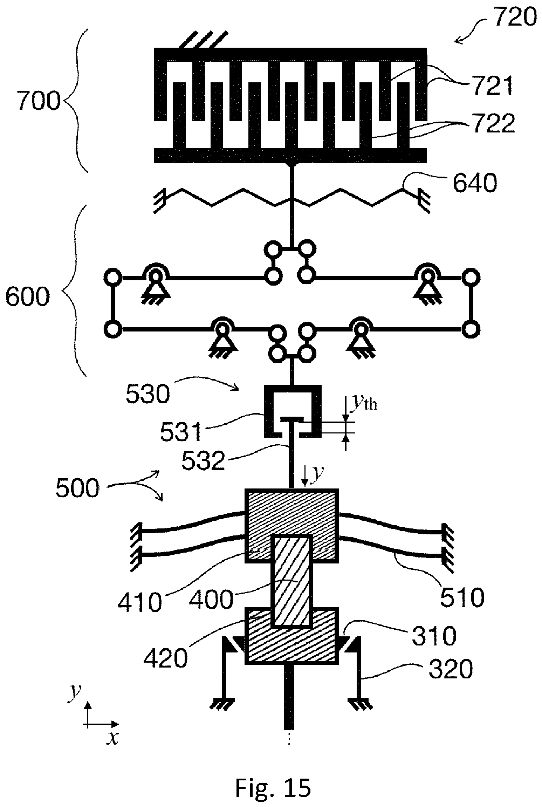

Die Aufgabe des elektromechanischen Wandlers 700 besteht darin, die Dehnung des Kriechbalkens 400 bzw. das daraus ermittelte Verschiebungssignal am Ausgang des Verstärkers 600 in ein elektrisches Signal zu wandeln. Alternativ ist es auch denkbar, direkt die Verschiebung am kriechfähigen Zugbalken 400 ohne zusätzliche Wegverstärkung in ein elektrisches Signal zu wandeln. Eine mögliche Ausführungsform des elektromechanischen Wandlers 700 wird in Fig. 15 gezeigt. Hierbei handelt es sich um einen kapazitiven Wandler 720 in Form eines Parallelplattenkondensators in Kammstruktur mit frei beweglichen Elektroden 722 und gestellfesten Elektroden 721. Die Dehnung des Zugbalkens führt zu einer Verschiebung der frei beweglichen Elektroden 722 gegenüber den gestellfesten Elektroden 721 und damit zu einer elektrisch messbaren Variation der Kapazität C am Plattenkondensator. Basis der Kapazitätsänderung ist hier die Veränderung der Überlappung der beiden Elektroden.

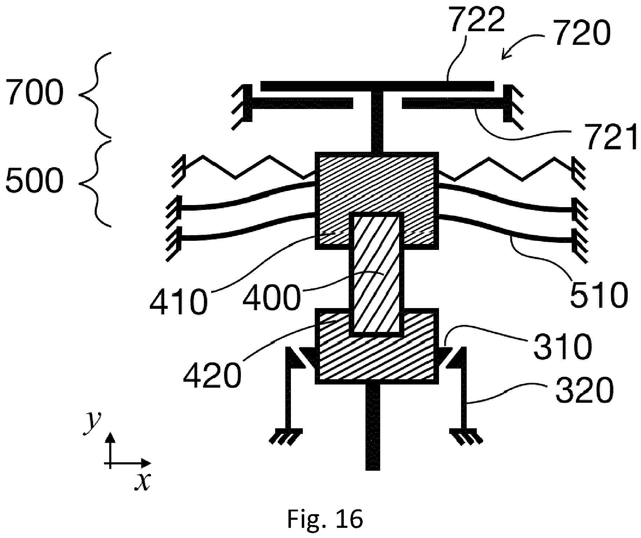

Fig. 16 zeigt eine alternative Anordnung eines kapazitiven Wandlers 720, bei dem der Abstand zwischen den beweglichen Elektroden 722 und den gestellfesten Elektroden 721 variiert und dadurch eine Kapazitätsänderung erzeugt wird. Der kapazitive Wandler ist hier direkt mit dem ersten Verbindungselement 410 verbunden; auf eine mechanische Wegverstärkung wird in diesem Beispiel verzichtet.

Die Auswertung der Kapazität am kapazitiven Wandler 720 erlaubt Rückschlüsse auf die Verschiebung/Dehnung des Zugbalkens und damit Rückschlüsse auf das erreichte TTI. Der Bereich zwischen den Elektroden 721, 720 umfasst vorzugsweise ein Gas, ein Vakuum oder Luft. Ein solches Dielektrikum zwischen den Elektroden hat gegenüber der variierenden Elektrodenüberlappung oder dem variierenden Abstand der Elektroden nur geringen Einfluss auf die Kapazitätsänderung. Die Auswertung der Kapazität ist damit weitgehend unabhängig von der vorliegenden Umgebungstemperatur. Das ist anders als bei bekannten Lösungen im Stand der Technik, bei denen eine kapazitive Auswertung direkt über das temperaturabhängige Indikatormaterial erfolgt.

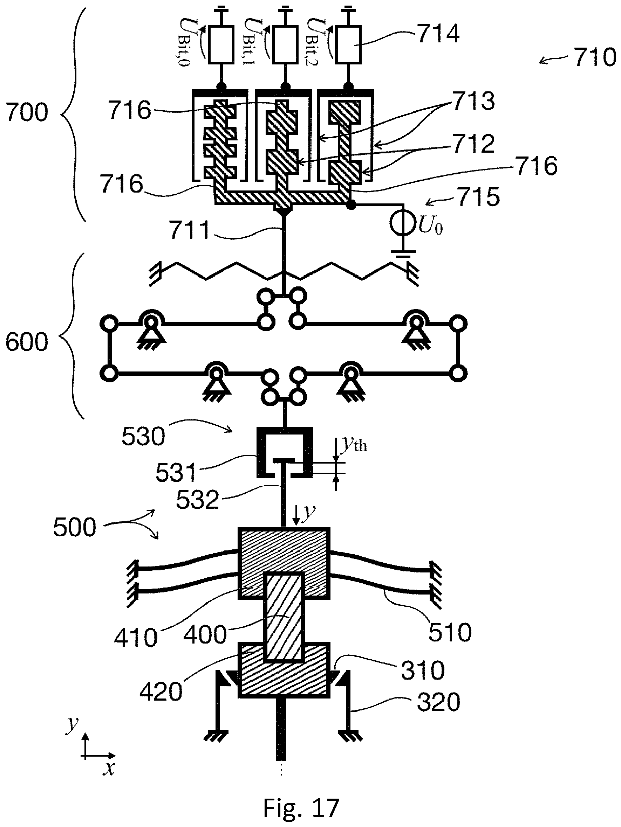

Fig. 17 zeigte eine weitere bevorzugten Ausführungsform des elektromechanischen Wandlers in Form eines mikromechanischen Analog-Digital-Wandlers 710. Der A/D-Wandler 710 ist dazu ausgeführt, ein Verschiebungssignal mit Hilfe von mikromechanischen Schaltern in ein digitales elektrisches Signal zu wandeln. Hierzu umfasst der A/D Wandler n gestellfeste und flexibel gelagerte Gegenelektroden 713 sowie dazu paarweise zugehörige Bit-Zweige 716 mit Fingerelektroden 712. Die Bit-Zweige sind dabei an einem Läufer 711 montiert und können translatorisch verschoben werden. Die Gegenelektroden 713 sind hingegen gestellfest entlang der Bit-Zweige 716 positioniert. Ein Bit-Zweig 716 umfasst eine oder mehrere Fingerelektroden 712, die dadurch gekennzeichnet sind, dass sie bei einer definierten translatorischen Auslenkung des Läufers einen elektrischen Kontakt mit den gestellfesten Gegenelektroden herstellen oder es zwischen Gegenelektroden und Fingerelektroden zu einer Impedanzänderung kommt, sobald sich beide Elektroden gegenüberstehen. Über die Anordnung der Elektroden wird die Position des Läufers eindeutig geometrisch codiert.

Zur elektrischen Erfassung der Verschiebung am Zugbalken bzw. am Ausgang des mechanischen Wegverstärkers 600 wird am Läufer eine elektrische Spannung $U_0$ angelegt. Gleichzeitig wird die Spannung an den gestellfesten Gegenelektroden 713 gemessen bzw. abgegriffen. Solange die Gegenelektroden 713 und die Fingerelektroden 712 nicht einander gegenüberstehen oder einander berühren, liegt an den Gegenelektroden ein erstes definiertes elektrisches Potential, beispielsweise 0 V, an. Dieses definierte erste elektrische Potential wird z.B. über Pull-down- oder Pull-up-Widerstände 714 an den gestellfesten Gegenelektroden gewährleistet. Wird nun der Läufer 711 verschoben, sodass je eine Fingerelektrode und eine Gegenelektrode einander gegenüberstehen, so wird die am Läufer angelegte Spannung $U_0$ von den Fingerelektroden an die Gegenelektroden übertragen, sodass nun an der entsprechenden Gegenelektrode ein zweites elektrisches Potential, vorzugweise $U_0$, anliegt. Gleichzeitig fällt über dem zugehörigen Pull-up- oder Pull-down-Widerstand eine Spannung $U_{Bit,i}$ ab. Je nach Zustand "offener Kontakt oder "geschlossener Kontakt" der jeweiligen Bits lässt sich ein paralleler binär codiertes Spannungssignal an den Widerständen abgreifen.

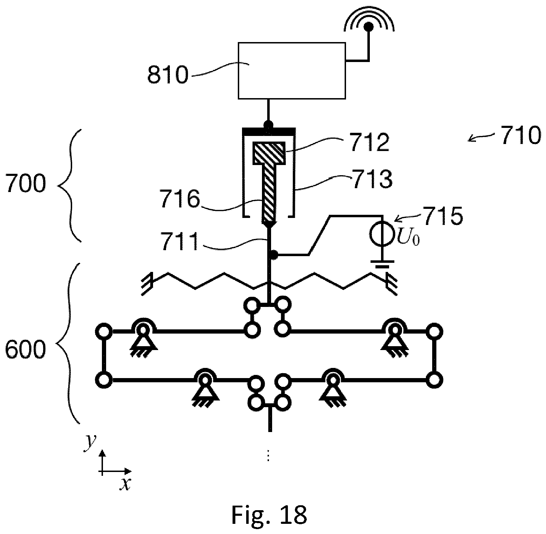

Durch die Anordnung der Fingerelektroden sind beliebige binäre Codierungen denkbar. So kann am A/D-Wandler ein Dual-Code, Gray-Code, BCD-Code, Thermometercode, etc. implementiert werden. Auch die Codierung über ein einziges Bit ist möglich. Somit lässt sich beispielsweise die Überschreitung eines kritischen TTI-Wertes signalisieren. Das Schalten eines Bits kann auch genutzt werden, um eine Folgeaktion einer nachgeschalteten elektronischen Schaltung zu aktivieren, beispielsweise durch Schließen eines Stromkreises und damit Bereitstellung einer Versorgungsspannung. Fig. 18 zeigt hierzu exemplarisch ein Ausführungsbeispiel, bei dem ein A/D-Wandler 710 mit nur einem Bit Auflösung genutzt wird, um bei Erreichung einer definierten Verschiebung des Läufers 711 einen nachgeschalteten Funksender 801 mit elektrischer Energie über eine Spannungsquelle 715 zu versorgen.

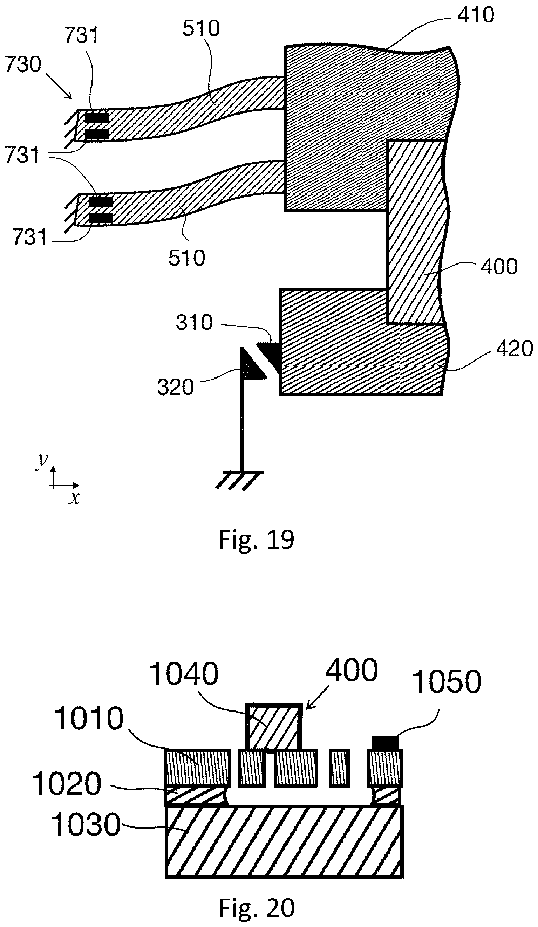

Eine weitere Möglichkeit, die Dehnung des Zugbalkens 400 elektrisch zu erfassen, besteht in der Integration eines piezoresistiven Wandlers 730, der dazu ausgeführt ist, Dehnungen insbesondere an Federn im mikromechanischen Messsystem in eine Widerstandsänderung zu wandeln. In einer bevorzugten Ausführungsform werden hierzu piezoresistive Widerstände 731 an den Führungsfedern 640 oder an den Knickfedern 510 oder den linearen Federn 520 am Kraft-Generator 500 montiert. Eine temperatur- und zeitabhängige Dehnung des kriechfähigen Zugbalkens führt zur Entspannung dieser Federn und damit zu einer Abnahme der mechanischen Spannung innerhalb der Federstrukturen. Über piezoresistive Widerstände wird die Änderung der mechanischen Spannung an den Federn in Form einer Widerstandsänderung elektrisch messbar gemacht. Fig. 19 zeigt eine mögliche Ausführungsform eines piezoresistiven Wandlers 730, bei dem piezoresistive Widerstände 731 an den Knickfedern 510 des Kraft-Generators 500 montiert sind. Die piezoresistiven Widerstände können beispielsweise in Form einer Wheatstone-Brücke miteinander verschaltet sein, um beim Auswerten der Widerstandsänderung den Temperatureinfluss zu kompensieren.

Das mikromechanische Messsystem zur Erfassung von Temperatur-Zeit Integralen lässt sich mit verschiedenen Technologien umsetzen, insbesondere mit Prozessen der Mikrosystemtechnik. Besonders geeignet ist die technologische Umsetzung auf Basis eines SOI-Substrates.

Diese Substrate umfassen mindestens drei Schichten: eine Device-Schicht, bestehend aus oder enthaltend Silicium 1010, eine Buried Oxide-Schicht (BOX-Schicht) aus $SiO_2$ 1020 und eine weitere Schicht bestehend aus oder enthaltend Silicium, der Handle-Schicht 1030.

Die Device-Schicht 1010 trägt die zweidimensionalen mechanischen Strukturen wie den Kraft-Generator 500 oder den mechanischen Wegverstärker 600. Die Handle- Schicht 1030 kann als mechanisches Gestell verstanden werden, das über die $SiO_2$-Schicht der BOX-Schicht 1020 mit den mechanischen Strukturen der Device- Schicht an fest definierten Stellen verbunden ist. Die BOX- Schicht 1020 bildet dabei eine Opferschicht, die unterhalb der frei beweglichen Strukturen partiell entfernt wird. Dadurch werden mechanische Strukturen an der Device- Schicht 1010 freigestellt, die sich in der Ebene frei bewegen können.

Zur Fertigung des mikromechanischen Messsystems 100 werden an der Device-Schicht 1010 die mechanischen und elektromechanischen Komponenten strukturiert. Bei den mikromechanischen Komponenten, wie bei dem elektromechanischen Wandler 700, dem Wegverstärker 600, dem Rastelement 300 oder dem Kraft-Generator 500, handelt es sich um zweidimensionale Strukturen, die an der Device- Schicht durch anisotropes Ätzen strukturiert werden können. Um eine elektrische Kontaktierung des elektromechanischen Signalwandlers 700 und/oder zur Kontaktierung des Aktors 200 zu realisieren, werden zudem elektrische Kontaktelektroden 1050 z.B. aus Aluminium an der Device-Schicht 1010 abgeschieden und strukturiert. Zur Umsetzung und Integration des kriechfähigen Zugbalkens 400 wird ein kriechfähiges Material 1040 am bzw. in der Device-Schicht 1010 aufgebracht und strukturiert. Hierbei kann es sich um ein viskoelastisches Material, wie Fotolack, Glas oder ein Polymer, handeln. Damit der kriechfähige Zugbalken 400 gedehnt werden kann, muss dieser an definierten Stellen von der Device-Schicht freigestellt werden. Fig. 20 zeigt einen möglichen Schichtaufbau des mikromechanischen Messsystems im Querschnitt.

Die Fertigung basiert vorzugsweise auf Verfahren der Mikrosystemtechnik: Zur Strukturübertragung wird beispielsweise Lithografie genutzt. Abscheidungen von Metall erfolgt über Sputtern oder Aufdampfen. Materialien, wie $SiO_2$

oder SiN, können als Hartmaske genutzt werden. Solche Schichten werden beispielsweise über CVD-Verfahren (CVD = Chemical Vapor Deposition), wie PECVD (Plasma Enhanced Chemical Vapor Deposition), abgeschieden. Subtraktive Fertigungsschritte basieren u.a. auf nasschemischem Ätzen und Plasmaätzen. Zu letzterem zählen insbesondere Verfahren wie reaktives Ionenätzen oder reaktives Ionentiefätzen zur Strukturierung von Silicium und Hartmasken.

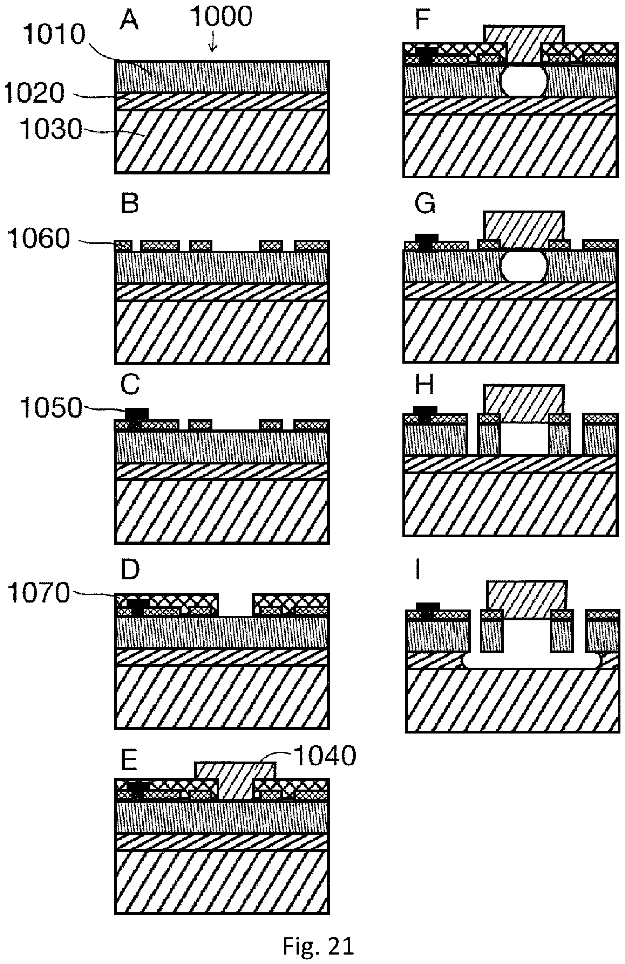

Fig. 21 zeigt einen möglichen Fertigungsablauf des mikromechanischen Messsystems auf Basis von Technologien der Mikrosystemtechnik:

Zunächst zeigt Fig. 21 A die Bereitstellung eines Substrats 1000 bestehend aus einer Handle-Schicht 1030, einer BOX-Schicht 1020 und einer Device- Schicht 1010. Es folgt in Fig. 21B die Abscheidung und Strukturierung einer ersten Hartmaske 1060, welche die mechanischen Strukturen beinhaltet. Anschließend werden die Elektroden, z.B. aus Al oder Cr/Au, abgeschieden und strukturiert, wie in Fig. 21C dargestellt. Anschließend wird in Fig. 21D eine weitere Hartmaske 1070 abgeschieden und strukturiert. Die zweite Hartmaske schützt die mechanischen Strukturen vor einem späteren isotropen Ätzprozess und legt gleichzeitig Flächen frei, die in einem Folgeprozess unterätzt werden sollen. In Fig. 21E wird das kriechfähige Material 1040 abgeschieden und strukturiert, um den kriechfähigen Zugbalken 400 umzusetzen. Zur Freistellung des Zugbalkens wird dieser in Fig. 21F isotrop z.B. über einen Plasmaätzprozess unterätzt. Die zuvor strukturierte zweite Hartmaske 1070 erlaubt an dieser Stelle ein selektives Unterätzen des Zugbalkens 400, während sonstige Strukturen an der Device-Schicht 1010 durch die Maske geschützt bleiben. Die zweite Hartmaske 1070 wird anschließend, wie in Fig. 21G gezeigt, selektiv zur ersten Hartmaske 1060 entfernt. Und wie in Fig. 21H gezeigt, wird nun die Device- Schicht über die erste Hartmaske durch anisotropes Ätzen, z.B. über reaktives Ionentiefätzen, strukturiert. Zur Freistellung der beweglichen Strukturen an der Device- Schicht wird schließlich die Device- Schicht unterätzt, indem die BOX- Schicht partiell, z.B. mittels Flusssäure, entfernt wird (s. Fig. 21I). Die Mikrosysteme können in weiteren Folgeprozessen eingehaust werden, z.B. über Wafer-Bonden, und schließlich zu Chips vereinzelt werden, z.B. mittels Sägen.

Die Fertigung des mikromechanischen Messsystems kann auch durch alternative Prozessfolgen erreicht werden. Die Reihenfolge der einzelnen Prozesse kann variieren, außerdem können Prozessschritte ergänzt oder ausgelassen werden.

Bezugszeichenliste

100: Mikromechanisches Messsystem zur Erfassung von Temperatur-Zeit Integralen

200: Mikromechanischer Aktor
    210: magnetischer Reluktanzaktor
    211: magnetische Fingeraktoren aus magnetischem Werkstoff
    212: externer Magnet
    213: polarisierter Mikromagnet
    220: elektrostatischer Parallelplattenaktor
    221: Elektroden mit erstem elektrischen Potential
    222: Elektroden mit zweitem elektrischen Potential
    223: Läufer am elektrostatischen Aktor
    224: (externe) elektrische Spannungsquelle
    230: thermischer Multi-Morph Aktor
    231: Aktorbalken aus einem ersten Material mit einem Wärmeausdehnungskoeffizienten $\alpha_{th,1}$
    232: Aktorbalken aus einem n-ten Material mit einem Wärmeausdehnungskoeffizienten $\alpha_{tn,n}$

300: Rastelement
    310: Rastzahn
    320: Sperrklinge
    320: Läufer am Aktor

400: kriechfähiger Zugbalken
    410: erstes Verbindungselement
    420: zweites Verbindungselement

500: Kraft-Generator
    510: nicht-lineare Feder (Knickfeder)
    520: lineare Feder/ Führungsfeder

530: Kupplung
540: Magnethalter
550: Mikromagnete
600: mechanischer Wegverstärker
610: erster Hebel
620: zweiter Hebel
630: Hebelverbinder
640: Führungsfedern
650: Eingangselement am Verstärker
660: Ausgangselement am Verstärker
700: Elektromechanischer Wandler
710: mechanischer Analog-Digital-Wandler
711: Läufer (mechanischer A/D-Wandler)
712: Fingerelektroden
713: Gegenelektroden
714: Pull-down- bzw. Pull-up-Widerstände
715: Spannungsquelle
716: Bit-Zweige
720: kapazitiver Wandler
721: gestellfeste Fingerelektroden
722: bewegliche Fingerelektroden
730: piezoresistiver Wandler
721: piezoresistiver Widerstand
800: RFID-Transponder
810: Funksender
900: visuelle Auswerteeinheit
1000: Substrat
1010: Device- Schicht
1020: BOX- Schicht
1030: Handle- Schicht
1040: kriechfähiges Material
1050: Elektrodenmaterial
1060: erste Hartmaske
1070: n-te Hartmaske

**Patentansprüche**

1. Mikromechanisches Messsystem (100) zur Messung und Speicherung eines Temperatur-Zeit Integrals, umfassend einen kriechfähigen Zugbalken (400) und einen Kraft-Generator (500), der dazu ausgeführt ist, den kriechfähigen Zugbalken (400) mit einer konstanten und wenigstens stückweise wegunabhängige Zugbeanspruchung zu beaufschlagen, so dass dieser ein Verschiebungssignal bereitstellt.

2. Mikromechanisches Messsystem gemäß Anspruch 1, weiterhin umfassend einen mikromechanischen Wegverstärker (600), der dazu ausgeführt ist, das Verschiebungssignal am kriechfähigen Zugbalken (400) zu verstärken.

3. Mikromechanisches Messsystem gemäß einem der Ansprüche 1 oder 2, weiterhin umfassend einen elektromechanischen Wandler (700), der dazu ausgeführt ist, das Verschiebungssignal oder ein davon abgeleitetes Signal in ein elektrisches Signal zu wandeln.

4. Mikromechanisches Messsystem gemäß Anspruch 3, wobei der elektromechanischen Wandler (700) in Form eines mikromechanischen Analog-Digital-Wandlers (710) ausgestaltet ist, der dazu ausgeführt ist, das Verschiebungssignal oder ein davon abgeleitetes Signal in ein paralleles elektrisches binär codiertes Signal zu wandeln.

5. Mikromechanisches Messsystem gemäß Anspruch 3, wobei der elektromechanischen Wandler (700) in Form eines kapazitiven Wandlers (720) ausgestaltet ist, der dazu ausgeführt ist, das Verschiebungssignal oder ein davon abgeleitetes Signal in eine Kapazitätsänderung zu wandeln.

**6.** Mikromechanisches Messsystem gemäß Anspruch 3, wobei der elektromechanischen Wandler (700) in Form eines piezoresistiven Wandlers (730) ausgestaltet ist, der dazu ausgeführt ist, das Verschiebungssignal oder ein davon abgeleitetes Signal in eine Widerstandsänderung zu wandeln.

**7.** Mikromechanisches Messsystem gemäß einem der Ansprüche 1 bis 6, weiterhin umfassend einen mikromechanischen Aktor (200), der dazu ausgeführt ist, durch ein äußeres Signal eine Kraft zu erzeugen, die dazu verwendet wird, eine Auslenkung des kriechfähigen Zugbalkens (400) zu bewirken, wobei es sich bei dem mikromechanischen Aktor (200) vorzugsweise um einen magnetischen, elektrostatischen, elektrothermischen oder einen thermischen Aktor handelt.

**8.** Mikromechanisches Messsystem gemäß Anspruch 7, wobei es sich bei dem Aktor (200) um ein Bi-Morph-, Multi-Morph- oder Formgedächtnis-Aktor handelt, der dazu ausgeführt ist, bei Über- oder Unterschreitung eines definierten Temperaturschwellwertes eine dauerhafte Auslenkung des kriechfähigen Zugbalkens (400) zu bewirken.

**9.** Mikromechanisches Messsystem gemäß einem der Ansprüche 1 bis 8, weiterhin umfassend eine Fixiereinheit (300), die dazu ausgeführt ist, nach einmaliger Erreichung oder Überschreitung einer definierten Auslenkung des Zugbalkens über den mikromechanischen Aktor (200) eine dauerhafte Fixierung der eingeprägten Verschiebung am kriechfähigen Zugbalken (400) zu gewährleisten.

**10.** Mikromechanisches Messsystem gemäß einem der Ansprüche 1 bis 9, weiterhin umfassend eine Kupplung (530) am Kraft-Generator (500) zur Begrenzung einer nichtkonstanten Kraftausübung des Kraft-Generators (500).

**11.** Mikromechanisches Messsystem gemäß einem der Ansprüche 1 bis 10, wobei der Kraft-Generator nicht-lineare Knickfedern (510) und lineare Federn (520) enthält, die dazu ausgelegt sind, eine Kraft zu generieren, die eine konstante und wegunabhängige Zugbeanspruchung am kriechfähigen Zugbalken (400) bewirkt.

**12.** Verfahren zur Herstellung eines mikromechanischen Messsystems gemäß einem der Ansprüche 1 bis 11, umfassend die folgenden Schritte:

(i) Bereitstellen einer Trägerschicht, die als Gestell fungiert (1030),
(ii) Aufbringen einer weiteren Schicht (1010), die die mechanischen und elektromechanischen Komponenten des mikromechanischen Messsystems enthält, und
(iii) Aufbringen und Strukturieren eines kriechfähigen Materials (1040) das als Zugbalken (400) fungiert.

**13.** Verfahren zur Messung des Temperatur-Zeit Integrals mit Hilfe eines mikromechanischen Messsystems gemäß einem der Ansprüche 1 bis 11, umfassend die folgenden Schritte:

(i) Aktivierung der Messung durch Auslenkung des kriechfähigen Zugbalkens und Fixierung der eingeprägten Verschiebung über das Rastelement zum dauerhaften Erhalt der eingeprägten Verschiebung,
(ii) Aufbringung einer konstanten Zugbeanspruchung am kriechfähigen Zugbalken über den Kraft-Generator und
(iii) Messung und zeitliche Integration des vorliegenden Temperaturverlaufs durch Erfassung der zeit- und temperaturabhängigen Dehnung am kriechfähigen Zugbalken in Form eines Verschiebungssignals.

**14.** Verfahren zur Messung des Temperatur-Zeit Integrals mit Hilfe eines mikromechanischen Messsystems gemäß Anspruch 13, umfassend die folgenden Schritte:

(iv) Wandlung des Verschiebungssignals über einen elektromechanischen Wandler in ein elektrisches Signal oder eine elektrisch auslesbare Zustandsänderung,
(v) Elektrische Erfassung des Verschiebungssignals über den elektromechanischen Wandler oder visuelle Auswertung der Verschiebung und
(vi) Berechnung des erreichten Temperatur-Zeit Integrals über die ermittelte Dehnung des kriechfähigen Zugbalkens mit Hilfe viskoelastischer Materialmodelle oder Abgleich mit empirisch ermittelten Zusammenhängen zwischen Dehnung des kriechfähigen Zugbalkens und Temperatur-Zeit Integral.

**15.** Verfahren zur Messung des Temperatur-Zeit Integrals mit Hilfe eines mikromechanischen Messsystems gemäß Anspruch 14, umfassend den folgenden weiteren Schritt zwischen besagten Schritten (iii) und (iv):
Verstärkung des Verschiebungssignals am kriechfähigen Zugbalken über einen mikromechanischen Wegverstärker.

Fig. 1

Fig. 2

Fig. 3

Fig. 4

Fig. 5

Fig. 6

# A

640

600

530

531

532

$y_{th}$

500

$y$

410   400

510

420

310

320

$y$
$x$

# B

$F$

$F_{total}(y)$

$F_{lin}(y)$

$F_{nl}(y)$

$d_{th}$

$y$

Fig. 7

# A

$t = 0$        $t = t_0$

420

400

410

$F_{\text{total}}(y_{\text{init}})$        $b_z$        $b_z$        $F_{\text{total}}(y_1)$

# B

$F$        $F_{\text{total}}(y)$

$y$

$\sigma$        $\sigma(y)$

$y_1$        $y_{\text{init}}$        $y$

Fig. 8

Fig. 9

Fig. 10

Fig. 11

Fig. 12

A

400

420

310

320

230

330

231

232

**Fig. 13**

B

230

231

232

$T_{\text{th}}$

900

640

660

620

630

610

650

600

c

d

b

a

**Fig. 14**

Fig. 15

Fig. 16

Fig. 17

Fig. 18

Fig. 19

Fig. 20

Fig. 21

Europäisches
Patentamt

European
Patent Office

Office européen
des brevets

**EUROPÄISCHER RECHERCHENBERICHT**

**Nummer der Anmeldung**

EP 24 15 0921

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 822 577 A1 (SCHMITT PHILIP [DE]) 19. Mai 2021 (2021-05-19) * Zusammenfassung * * Absätze [0001], [0021], [0028], [0029], [0034], [0046] - [0049], [0051], [0052], [0882], [0102], [0108], [0123], [0124], [0127] * * Abbildungen 3,4,13-22 * | 1-15 | INV. G01K3/04 |
| A | ----- DE 23 38 789 A1 (ICI LTD) 14. Februar 1974 (1974-02-14) * Zusammenfassung * * das ganze Dokument * ----- | 1-15 | |

**RECHERCHIERTE SACHGEBIETE (IPC)**

G01K

Der vorliegende Recherchenbericht wurde für alle Patentansprüche erstellt

| Recherchenort | Abschlußdatum der Recherche | Prüfer |
|---|---|---|
| Den Haag | 28. Mai 2024 | Bagnera, Carlo |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 .................................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 15 0921

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-05-2024

| Im Recherchenbericht angeführtes Patentdokument | Datum der Veröffentlichung | Mitglied(er) der Patentfamilie | Datum der Veröffentlichung |
|---|---|---|---|
| EP 3822577 A1 | 19-05-2021 | EP 3822577 A1 | 19-05-2021 |
| | | EP 4336143 A2 | 13-03-2024 |
| | | EP 4354082 A2 | 17-04-2024 |
| DE 2338789 A1 | 14-02-1974 | AU 475282 B2 | 19-08-1976 |
| | | CA 1033628 A | 27-06-1978 |
| | | CH 558009 A | 15-01-1975 |
| | | DE 2338789 A1 | 14-02-1974 |
| | | DK 138056 B | 03-07-1978 |
| | | FR 2194959 A1 | 01-03-1974 |
| | | GB 1444712 A | 04-08-1976 |
| | | IT 998507 B | 20-02-1976 |
| | | JP S4986072 A | 17-08-1974 |
| | | NL 7310508 A | 04-02-1974 |
| | | SE 394519 B | 27-06-1977 |
| | | US 3955418 A | 11-05-1976 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0497459 A1
- EP 1781805 B1
- DE 2502324 A1
- EP 2697641 B1
- DE 69633071 T2
- US 9448182 B2
- WO 2009144673 A1

**In der Beschreibung aufgeführte Nicht-Patentliteratur**

- **PANDIAN, A.T. ; S. CHATURVEDI ; S. CHAKRABORTY.** Applications of enzymatic time-temperature indicator (TTI) devices in quality monitoring and shelflife estimation of food products during storage. *Journal of Food Measurement and Characterization,* 2021, vol. 15 (2), 1523-1540
- MEMS. *Journal of Microelectromechanical Systems,* 2018, vol. 27 (1), 40-46
- **SCHMITT, P. ; L. SCHMITT ; N. TSIVIN ; M. HOFFMANN.** Highly Selective Guiding Springs for Large Displacements in Surface MEMS. *Journal of Microelectromechanical Systems,* 2021, vol. 30 (4), 597-611
- **SCHOMBURG, W.K.** Introduction to Microsystem Design. Springer bekannt, 2011